# EUROPÄISCHE PATENTSCHRIFT

(11) **EP 4 030 247 B1**
(45) Veröffentlichungstag und Bekanntmachung des Hinweises auf die Patenterteilung: **03.05.2023**
(21) Anmeldenummer: 21152061.4
(22) Anmeldetag: 18.01.2021
(51) Int. Cl.: G05B 19/409

(54) **RÜCKANNOTATION VON LASTENREDUKTIONEN BEI CLIENTS**
BACK-ANNOTATION OF LOAD REDUCTIONS FOR CLIENTS
ANNOTATION DE RETOUR DES RÉDUCTIONS DE CHARGE DES CLIENTS

(43) Veröffentlichungstag der Anmeldung: 20.07.2022
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A2- 2 354 873
- CN-A- 108 710 347
- DE-A1- 10 053 665

## Beschreibung

Die Erfindung betrifft ein Leitsystem für eine technische Anlage, insbesondere Prozess- oder Fertigungsanlage, das einen Operator Station Server, einen Engineering Station Server und einen Operator Station Client aufweist, wobei der Operator Station Server dazu ausgebildet ist, zur Bedienung und Beobachtung ein Anlagenbild der technischen Anlage an den Operator Station Client zu übertragen, und wobei der Operator Station Client dazu ausgebildet ist, bei einer zu erwartenden Übersteigung der für eine visuelle Darstellung des Anlagenbildes zur Verfügung stehenden Zeitdauer die visuelle Darstellung des Anlagenbildes zu beschränken. Außerdem betrifft die Erfindung die Verwendung eines Leitsystems und ein Verfahren zur visuellen Darstellung eines Anlagenbildes einer technischen Anlage.

Für die Bedienung und Beobachtung verfahrenstechnischer Anlagen werden symbolische Anlagenbilder erstellt, die die verfahrenstechnischen Zusammenhänge - insbesondere zwischen den Prozessobjekten - abstrahiert darstellen. Anlagenbilder setzen sich aus statischen Symbolen (z.B. Leitungen, Rechtecke, usw.), dynamisierten Symbolen (z.B. in Abhängigkeit von Prozesswerten Leitungen mit Farbumschlag, Rechtecken mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, die Inhalte aus unabhängigen und eigenständige Quellen visualisieren können (z.B. Webcams, Anlagenbilder modularer Anlagenteile oder Apps wie Regleroptimierer), zusammen.

Die Container in Anlagenbildern werden durch unterschiedliche Technologien realisiert. In aktuellen, weborientierten Leitsystemen erfolgt die Realisierung z.B. durch so genannte iFrames oder auf Grundlage der iFrame basierten SWAC-Technologie (Siemens Web Application Collaboration). Auch die zuvor genannten komplexen Controls (Trendanzeigen, XY-Graphen, Meldefolgeanzeigen, Schrittketten, Batch, usw.) werden in der Regel durch Container in Anlagenbildern eingebettet, da somit die zu Grunde liegenden Applikationen serverseitig entkoppelt und verteilt werden können, um ein höheres Maß an Robustheit zu erreichen.

Moderne Anlagenbilder sind somit heterogen, da diese Anlagenbild nicht durch eine einzige Applikation dynamisiert werden, sondern durch viele unterschiedliche Applikationen, die auch auf unterschiedlichen Servern lokalisiert sein können. Diese Modularität ist zur Adressierung von Anforderung des Internet 4.0 (flexible, modulare und dynamisch rekonfigurierbare Anlagen) sinnvoll und notwendig, stellt jedoch die Visualisierung der heterogenen Anlagenbildern in Operator Station Clients vor entsprechende Herausforderungen, insbesondere im Hinblick auf Stabilität, Zuverlässigkeit und Leistungsfähigkeit der Operator Station Clients.

Sind in einem Anlagenbild mehrere Container eingebettet, und beansprucht der Inhalt eines Containers - z.B. eine Meldefolgeanzeige - für sich mehr Zeit für das Zeichnen (Rendering), so werden andere Container wie auch das restliche Anlagenbild negativ beeinflusst. Die hieraus resultierenden Probleme können vielfältig sein: Zum einen kann es zu "träge" dynamisierten Anlagenbildern kommen. Zudem sind "eingefrorene" und somit nicht bedienbare Anlagenbilder möglich. Auch ein "abstürzender" Operator Station Client ist möglich, wenn sich die Aktualisierungsanforderungen aufstauen und der Operator Station Client mangels eines verfügbaren Speichers abstürzt.

In diesen besonders schwerwiegenden Fällen setzt somit die Bedienung und Beobachtung der verfahrenstechnischen Anlage aus - diese befindet sich somit im Blindflug. Um Überlasten vorzubeugen, sind deshalb verschiedene Verfahren zur Lastenreduktion bekannt. Als Beispiele seien drei Verfahren für unterschiedliche Bildelemente zur Reduktion der Zeichenlast genannt:
1) Reduktion der Zeichenlast bei Trendanzeigen:
   - Eine dynamisch adaptive Erhöhung des Aggregationsfaktors führt zu einer Reduktion der zu zeichnenden Punkte für eine Trendkurve
   - Durch eine dynamisch adaptive Erhöhung der Aktualisierungszeiten wird der Trend seltener mit neuen Prozesswerten aktualisiert (z.B. nicht mehr jede Sekunde, sondern jede zweite - oder bei jedem zweiten Zeichnen des Anlagenbildes).
2) Reduktion der Zeichenlast bei Meldefolgeanzeigen:
   - Durch eine dynamisch adaptive Erhöhung der Aktualisierungszeiten wird die Meldefolgeanzeige seltener aktualisiert (z.B. nicht mehr jede Sekunde, sondern jede zweite - oder bei jedem zweiten Zeichnen des Anlagenbildes)
3) Reduktion der Zeichenlast bei Webcam-Controls
   - Durch eine dynamisch adaptive Erhöhung der Bildwiederholfrequenz wird beispielsweise ein Kamerabild seltener aktualisiert (z.B. nicht mehr jede Sekunde, sondern jede zweite - oder bei jedem zweiten Zeichnen des Anlagenbildes)

Derartige, bekannte Verfahren sind beispielsweise in der DE 100 536 65 A1 offenbart.

Auch wenn durch diese Verfahren der "Totalausfall" der Bedienung und Beobachtung abgewendet werden kann, bringen sie doch entscheidende Nachteile für die Bedienung und Beobachtung einer technischen Anlage (beispielsweise einer Prozessanlage) mit sich. Beispielsweise sind geringere Aktualisierungszeiten von Anlagenbildern und der Verlust von Detaillierungen in Trendanzeigen und dergleichen mit den bekannten Verfahren verbunden.

Ist ein Anlagenbild so gestaltet, dass es grundsätzlich den Operator Station Client zu überlasten droht, ist es für einen Operatoren zudem oftmals schwierig zu erkennen, dass Lastenreduktionen angewandt wurden und dass das Anlagenbild eigentlich ein anderes Aussehen hätte. Auch ist es für einen Operatoren nicht unmittelbar ersichtlich, welche Bildelemente dazu geführt haben, dass die Lastenreduktionen angestoßen wurden. Daher kann er auch keine Modifikationen des Anlagenbildes in Auftrag geben, so dass zukünftig keine Lastenreduktionen mehr notwendig sind. Es ist somit schwierig, auffällige Anlagenbilder entsprechend zu optimieren, so dass die Bedienung und Beobachtung ohne Einschränkung erfolgen kann.

Auf der anderen Seite ist es aktuell nicht möglich, die Anlagenbilder bereits im Voraus, d.h. bei der Projektierung einer Automatisierung einer technischen Anlage, so zu parametrieren, dass es zu keinen Lastproblemen in den (Operator Station) Clients führen kann. Dies liegt hauptsächlich daran, dass nicht nur der Inhalt der Anlagenbilder, sondern auch die Hardware, auf der das Anlagenbild visualisiert wird, ausschlaggebend für eine reibungslose Visualisierung der Anlagenbilder ist. Und speziell bei der Verwendung eines webbasierten Leitsystems kann eine Vielzahl verschiedener Hardwaretypen als Client eingesetzt werden.

Der Erfindung liegt die Aufgabe zugrunde, ein Leitsystem für eine technische Anlage anzugeben, das mit einer hohen Verfügbarkeit Anlagenbilder der technischen Anlage darstellen kann.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch die Verwendung eines Leitsystems zum Betrieb einer technischen Anlage gemäß Anspruch 8. Zudem wird die Aufgabe gelöst durch ein Verfahren zur visuellen Darstellung eines Anlagenbildes einer technischen Anlage gemäß Anspruch 9. Vorteilhafte Weiterbildungen ergeben sich aus den abhängigen Ansprüchen.

Ein Leitsystem eingangs beschriebener Art weist (wenigstens) einen Operator Station Server, einen Engineering Station Server und einen Operator Station Client auf. Dabei ist der Operator Station Server dazu ausgebildet, zur Bedienung und Beobachtung ein zuvor durch den Engineering Station Server erzeugtes Anlagenbild der technischen Anlage an den Operator Station Client zu übertragen. Zudem ist der Operator Station Client dazu ausgebildet, bei einer zu erwartenden Übersteigung der für eine visuelle Darstellung des Anlagenbildes zur Verfügung stehenden Zeitdauer die visuelle Darstellung des Anlagenbildes zu beschränken. Das Leitsystem ist erfindungsgemäß dadurch gekennzeichnet, dass der Operator Station Client dazu ausgebildet ist, den Engineering Station Sever automatisiert über die Beschränkung der visuellen Darstellung des Anlagenbildes durch eine Nachricht zu informieren.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server, dem Operator Station Client und dem Engineering Station Server beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Man spricht auch von einem "Engineering" oder einer "Projektierung" der Automatisierung der technischen Anlage. Ein Beispiel für einen solchen Engineering Station Server ist ein SIMATIC Manager Server der Firma SIEMENS.

Bei dem Anlagenbild, welches der auf dem Engineering Station Server erzeugt und von dem Operator Station Server an den Operator Station Client zur visuellen Darstellung übertragbar ist, handelt es sich um ein üblicherweise für Leitsysteme verwendetes Bedienbild, welches grafische Repräsentationen einzelner Elemente der technischen Anlage umfasst und zur Darstellung eines Status der einzelnen Elemente, eines (z.B. verfahrenstechnischen) Zusammenhangs zwischen den Elementen oder dgl. dient.

Das Anlagenbild kann verschiedene Bildelemente wie eine Alarmmeldungsanzeige, Verbindungsleitungen, Regler oder graphische Repräsentationen von technischen Objekten der technischen Anlage umfassen. Die Alarmmeldungsanzeige kann dabei beispielsweise in tabellarischer Auflistung einen Überblick über in dem Leitsystem aufgekommene Alarmmeldungen liefern und wird auch als Meldefolgeanzeige bezeichnet.

Der Operator Station Client ist dazu ausgebildet, die visuelle Darstellung des Anlagenbildes bei Bedarf zu beschränken. Dies dient der Vermeidung einer Überlast des Operator Station Clients. Dabei können die zuvor bereits erläuterten, an sich bekannten Verfahren zum Einsatz kommen.

Wird von ihm eine solche Beschränkung vorgenommen, informiert der Operator Station Client automatisch den Engineering Station Server hierüber mittels einer hierfür vorgesehenen Nachricht. Der Projekteur der technischen Anlage, welcher zuvor im Rahmen einer Projektierung (Engineering) der Automatisierung der technischen Anlage wenigstens ein Anlagenbild (in der Regel eine Vielzahl von Anlagenbildern) durch den Engineering Station Server erzeugt hat, kann bei dem erfindungsgemäßen Leitsystem automatisiert eine Rückmeldung über potentielle Überlastprobleme des Operator Station Clients erhalten. Daraufhin kann er gezielt die Projektierung anpassen, um die Überlasten bzw. die Beschränkung der visuellen Darstellung des Anlagenbildes zu vermeiden. Das erfindungsgemäße Leitsystem ist daher in erhöhtem Maße für eine Ausführung auf verschiedenen Hardwareplattformen, wie sie insbesondere bei Verwendung von webbasierten Leitsystemen zum Einsatz kommen, vorteilhafterweise geeignet.

Der Operator Station Server kann dem Operator Station Client beim Übertragen des Anlagenbildes die zusätzliche Information mitteilen, welche Zeitdauer der Operator Station Client für die visuelle Darstellung des Anlagenbildes aufwenden darf. Mit anderen Worten gibt er dem Operator Station Client ein Zeitbudget mit, das ihm für das Zeichnen des Anlagenbildes zur Verfügung steht. Dieses Zeitbudget kann im Engineering, d.h. beim Erstellen einer Automatisierung der technischen Anlage, festgelegt worden sein.

Wenn ein neues bzw. aktualisiertes Anlagenbild (oder eine Vielzahl von Anlagenbildern, oder auch nur ein neues/aktualisiertes Bildelement eines bereits an den Operator Station Client übertragenen Anlagenbildes) in dem Leitsystem aufkommt, kann der Operator Station Server dieses nicht sofort an den Operator Station Client übertragen, sondern zuerst eine Nachricht an den Operator Station Client senden, die diesen über das Aufkommen des neuen / aktualisierten Anlagenbildes informiert. Der Operator Station Client kann hieraufhin berechnen, ob ihm sein Zeitbudget zur Darstellung des neuen Anlagenbildes reicht. Hierzu prüft er, ob die Darstellungszeit für die visuelle Darstellung des neuen oder aktualisierten Anlagenbildes die Zeitdauer, die der Operator Station Client für die visuelle Darstellung des Anlagenbildes aufwenden darf, übersteigen würde.

Falls dies nicht der Fall ist, kann der Operator Station Client das neue/aktualisierte Anlagenbild vom Operator Station Server abrufen und visuell darstellen.

Falls das Zeitbudget überschritten werden würde, ist der Operator Station Client wie bereits ausgeführt dazu ausgebildet, die visuelle Darstellung des Anlagenbildes zu beschränken. Dadurch kann er dynamisch auf sich verändernde Anforderungen reagieren.

Die Nachricht kann eine Referenz auf das Anlagenbild umfassen. Dabei kann es sich um einen Namen und/oder eine Identifikation (ID) des Anlagenbildes handeln. Damit erhält der Projekteur gezielt eine Information über das potenziell die Überlast des Operator Station Clients verursachende Anlagenbild und kann effizienter eine Überarbeitung der Projektierung vornehmen. Die Nachricht kann noch feingranulare Informationen wie einen Typ und/oder eine Identifikation eines Bildelementes des Anlagenbildes umfassen. Damit erhält der Projekteur nicht nur den Hinweis, dass ein spezielles Anlagenbildes betroffen ist, sondern auch, welches Bildelement (beispielsweise eine Meldefolgeanzeige oder eine Trendanzeige) ursächlich für die potenzielle Überlastung des Operator Station Clients ist.

Im Rahmen einer vorteilhaften Weiterbildung der Erfindung umfasst die Nachricht Informationen über den Operator Station Client, wobei die Informationen insbesondere einen Namen, einen Typ und/oder einen Standort des Operator Station Clients, und/oder eine Einbindung des Operator Station Clients in ein Kommunikationsnetz der technischen Anlage umfassen. Hieraus kann der Projekteuer beispielsweise ableiten, ob nur eine bestimmter (Hardware-)Typ oder ein bestimmter Standort des Operator Station Clients (der u.U. nur eine langsame Kommunikationsverbindung ermöglicht) für die potentielle Überlast des Operator Station Clients verantwortlich ist, oder ob eventuell ein prinzipielles Problem besteht, welches eine Vielzahl von Operator Station Clients betreffen kann.

Die Nachricht kann auch ein Maß für die vorgenommenen Beschränkung umfassen. Wird beispielsweise bei einer Trendanzeige eine Lastenreduktion durch eine Erhöhung der Aggregation durchgeführt, so kann das Verhältnis zwischen idealer Aggregation und realer Aggregation als Maß verwendet werden. Für die ideale visuelle Darstellung eines Trends mit 1000 zeichenbaren Punkten wird beispielsweise eine Aggregation von 1/10 berechnet (10 Messpunkte werden zu 1 Messpunkt verrechnet, um 1000 Messpunkte darstellen zu können). Je nach Operator Station Client wird nach einer Lastenreduktion eine Aggregation von 1/12, bzw. 1/20 angewendet. Das Maß der vorgenommenen Beschränkung (hier die Erhöhung der Aggregation) kann dem Projekteur Aufschluss darüber geben, wie kritisch die Überlastprobleme des Operator Station Clients sind. Hieraus kann er beispielsweise eine Priorisierung von Nachrichten vornehmen, die der Projekteur zu bearbeiten hat.

Bevorzugt ist der Operator Station Server dazu ausgebildet, die Nachricht des Operator Station Clients in einem Nachrichtenarchiv zu hinterlegen, derart, dass die Nachricht von einem Operator und/oder einem Projekteur des Leitsystems abrufbar ist. Der Operator erhält hierdurch eine unmittelbare Rückmeldung über eine vorgenommene Lastreduktion.

Die von dem Operator Station Client erzeugte Nachricht kann eine Alarmmeldung sein, deren Bearbeitung von einem Projekteur und/oder einem Operator des Leitsystems quittierbar ist. Der Projekteur kann sich so des normalerweise standardmäßig in einem Leitsystem vorhandenen Alarmmanagementsystems bedienen, um auf einfache Art und Weise mögliche Probleme bei der Visualisierung eines Anlagenbildes identifizieren zu können. Die Quittierung der Alarmmeldung durch den Projekteur zeigt einem Operator als Bediener des Operator Station Clients an, dass sich der Projekteur bereits das Problem der potenziellen Überlastung des Operator Station Clients behandelt/gelöst hat. In bestimmten Fällen (wenn keine Überarbeitung der Projektierung vonnöten ist) kann es auch sinnvoll sein, dass der Operator die Alarmmeldung quittiert.

Die zuvor formulierte Aufgabe wird zudem gelöst durch die Verwendung eines Leitsystems, welches wie zuvor erläutert ausgebildet ist, zum Betrieb einer technischen Anlage, insbesondere Prozess- oder Fertigungsanlage.

Die Aufgabe wird zudem gelöst durch ein Verfahren zur visuellen Darstellung eines Anlagenbildes einer technischen Anlage, insbesondere Prozess- oder Fertigungsanlage, die einen Operator Station Server, einen Engineering Station Server und einen Operator Station Client aufweist, das Verfahren umfassend:
a) Übertragen eines Anlagenbilds der technischen Anlage von dem Operator Station Server an den Operator Station Client;
b) Beschränkte visuelle Darstellung des Anlagenbildes durch den Operator Station Client;
c) Automatisiertes Notifizieren des Engineering Station Servers über die von dem Operator Station Client vorgenommene Beschränkung der visuellen Darstellung des Anlagenbildes durch eine Nachricht.

Bevorzugt umfasst die Nachricht dabei eine Referenz auf das Anlagenbild.

Besonders bevorzugt umfasst die Nachricht einen Typ und/oder eine Identifikation eines Bildelementes des Anlagenbildes.

Die Nachricht kann Informationen über den Operator Station Client umfassen, wobei die Informationen insbesondere einen Namen, einen Typ und/oder einen Standort des Operator Station Clients, und/oder eine Einbindung des Operator Station Clients in ein Kommunikationsnetz der technischen Anlage umfassen.

Die Nachricht kann auch ein Maß für die vorgenommene Beschränkung umfassen.

Bevorzugt hinterlegt der Operator Station Server die Nachricht des Operator Station Clients in einem Nachrichtenarchiv, derart, dass die Nachricht von einem Operator und/oder einem Projekteur des Leitsystems abrufbar ist.

Besonders bevorzugt ist die Nachricht eine Alarmmeldung, deren Bearbeitung von einem Projekteur und/oder einem Operator des Leitsystems quittierbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: eine schematische Darstellung eines erfindungsgemäßen Leitsystems; und
- FIG 2: ein auf einem Engineering Station Server eines erfindungsgemäßen Leitsystems implementiertes Entwurfswerkzeug.

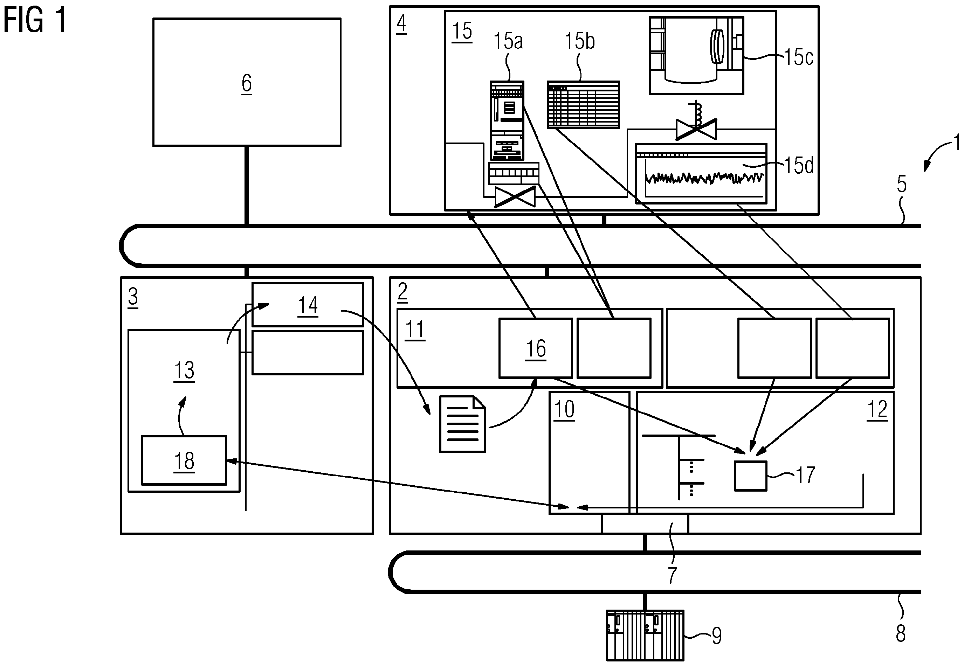

In der Figur 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2, einen Engineering Station Server 3, einen Engineering Station Client 6 und einen Operator Station Client 4.

Der Operator Station Server 2, der Engineering Station Server 3, der Engineering Station Client 6 und der Operator Station Client 4 sind über einen Terminalbus 5 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 4 mittels des Terminalbus 5 auf den Operator Station Server 2 zugreifen. Ein Projekteur kann über den Engineering Station Client 6 mittels des Terminalbus 5 auf den Engineering Station Server 3 zugreifen. Der Terminalbus 5 kann, ohne sich darauf zu beschränken, beispielsweise als Industrial Ethernet ausgebildet sein.

Der Operator Station Server 2 weist eine Geräteschnittstelle 7 auf, die mit einem Anlagenbus 8 verbunden ist. Über diese Geräteschnittstelle 7 kann der Operator Station Server 2 mit einem Automatisierungsgerät 9 sowie mit optional vorhandenen weiteren Komponenten der Prozessanlage kommunizieren. Der Anlagenbus 8 kann, ohne sich darauf zu beschränken, beispielsweise als Industrial Ethernet ausgebildet sein. Das Automatisierungsgerät 9 kann mit einer beliebigen Anzahl an Subsystemen (nicht dargestellt) verbunden sein.

Auf dem Operator Station Server 2 sind ein Alarmdienst 10, ein Visualisierungsdienst 11 und ein Prozessabbild 12 implementiert. Auf dem Engineering Station Server 3 sind ein Entwurfswerkzeug 13 und ein Kompilierungsdienst 14 implementiert.

Im Folgenden wird der Ablauf eines erfindungsgemäßen Verfahrens beschrieben: Ein Projekteur erstellt mithilfe des Entwurfswerkzeugs 13 ein Anlagenbild 15. Das Anlagenbild 15 wird durch den Kompilierungsdienst 14 in ein für den Operator Station Server 2 verständliches Format gebracht und von einem Anlagenbilddienst 16 des Operator Station Servers 2 an den Operator Station Client 4 übertragen, damit dieser das Anlagenbild 15 einem Operator des Leitsystems 1 visuell darstellt. Das Anlagenbild 15 umfasst dabei eine Mehrzahl von einzelnen Bildelementen 15a, 15b, 15c, 15d.

Der Operator Station Client 4 stellt aufgrund einer von ihm erkannten potenziellen Überlastung das Anlagenbild 15 nur beschränkt dar. Dabei kann er die im einleitenden Teil beschriebenen Techniken des Standes der Technik verwenden. Der Operator Station Client 4 erzeugt eine Alarmmeldung 17, die von dem Alarmdienst 10 des Operator Station Servers 2 in einem zu ihm gehörigen Nachrichtenarchiv hinterlegt werden. Zusätzlich wird die Alarmmeldung an einen Notationsdienst 18 des Entwurfswerkzeuges 13 übertragen. Hierüber kann der Projekteur auf die Alarmmeldung 17 zugreifen und diese bearbeiten. In dem in dem Entwurfswerkzeug 13 dargestellten, von der Alarmmeldung 17 betroffenen Anlagenbild 15 ist das von dem Lastproblem betroffene Bildelement 15a, 15b, 15c, 15d grafisch hervorgehoben (farbige Markierung, blinkende Animation oder dgl.). Dadurch kann dem Projekteur effizient dargestellt werden, für welches Bildelement eine Lastenreduktion angestoßen wurde. Zudem kann dargestellt werden, wie oft welche Operator Station Clients 3 mit welchem Maß eine Beschränkung der visuellen Darstellung des Anlagenbildes 15 vorgenommen haben. Auf dieser Informationsgrundlage kann der Projekteur dann entscheiden, ob und wie der das jeweilige Anlagenbild 15 optimiert. Nach der Bearbeitung der Alarmmeldung 17 kann der Projekteur diese quittieren. Die Quittierung wird dann in den Alarmdienst 10 zurückgespielt, so dass der Operator die Quittierung zur Kenntnis nehmen kann.

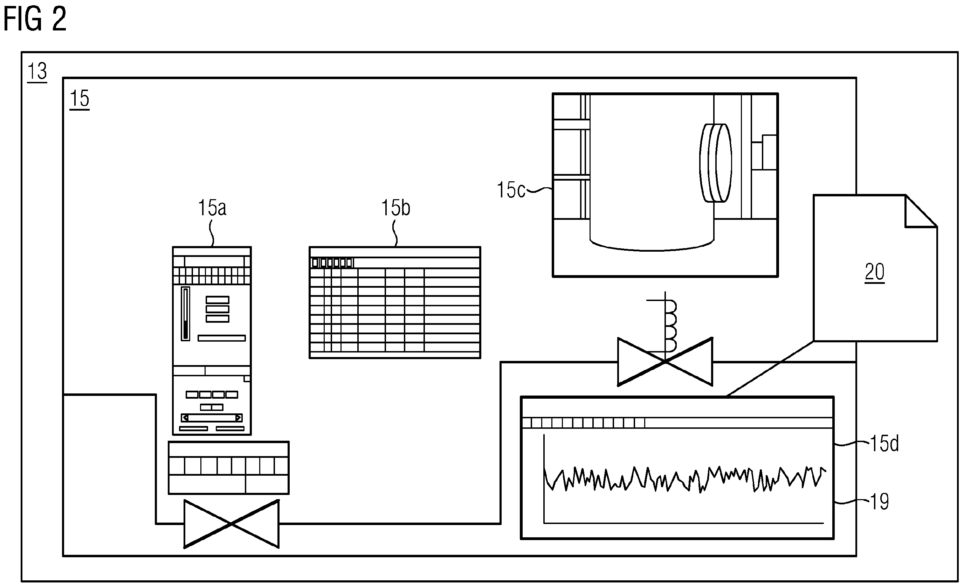

In FIG 2 ist das Anlagenbild 15 mit den einzelnen Bildelementen 15a, 15b, 15c, 15d gezeigt, wie es von dem Entwurfswerkezug 13 dargestellt wird. Auf Basis der erhaltenen Alarmmeldung 17 wird in dem geöffneten Anlagenbild 15 das Bildelement 15d rechtsunten im Anlagenbild 15 (eine Trendanzeige eines Prozesswertes) durch einen farbigen Rahmen 19 hervorgehoben. Für dieses Bildelement 15d musste der Operator Station Client 4 eine Lastreduktion anwenden bzw. die visuelle Darstellung beschränken. Neben der Hervorhebung des betreffenden Bildelementes 15d kann weiterhin auch noch ein in der Alarmmeldung 17 hinterlegter Kontext 20 abgerufen und dargestellt werden, um beurteilen zu können, ob eine Korrektur auch tatsächlich notwendig ist.

Ist dem Kontext beispielsweise zu entnehmen, dass eine Lastenreduktion der Trendanzeige gleich in mehreren Operator Station Clients 4 angewandt wurde, so liegt es nahe, dass die Projektierung der Trendanzeige generell nachgebessert werden sollte, um Überlasten vorzubeugen - z.B. durch Verringerung des Zeitbereichs, Reduktion der Kurven, usw. Danach kann das überarbeitete Anlagenbild 15 in an sich bekannter Weise wieder auf den Operator Station Server 2 geladen werden.

Wurde eine Lastenreduktion jedoch nur von einem Operator Station Client 4 gemeldet, so sind keine Korrekturen erforderlich. Es ist hier eher zu prüfen, ob der Operator Station Client 4 in seiner Netzwerkanbindung, seiner Rechenleistung usw. eingeschränkt ist.

Durch das erfindungsgemäße Leitsystem 1 bzw. das dazugehörige Verfahren können sowohl bei der Inbetriebnahme als auch im laufenden Betrieb die Anlagenbilder 15 für das Bedienen und Beobachten iterativ verbessert werden, um durch Lastenreduktionen hervorgerufene Einschränkungen der Bedienung und Beobachtung vorbeugen zu können. Insgesamt kann durch die Erfindung ein Beitrag für eine höhere Verfügbarkeit der technischen Anlage geleistet werden, speziell bei Anwendung eines webbasierten Leitsystems 1.

## Patentansprüche

1. Leitsystem (1) für eine technische Anlage, insbesondere Prozess- oder Fertigungsanlage, das einen Operator Station Server (2), einen Engineering Station Server (3) und einen Operator Station Client (4) aufweist,
wobei der Operator Station Server (2) dazu ausgebildet ist, zur Bedienung und Beobachtung ein zuvor durch den Engineering Station Server (3) erzeugtes Anlagenbild (15) der technischen Anlage an den Operator Station Client (4) zu übertragen,
und wobei der Operator Station Client (4) dazu ausgebildet ist, bei einer zu erwartenden Übersteigung der für eine visuelle Darstellung des Anlagenbildes (15) zur Verfügung stehenden Zeitdauer die visuelle Darstellung des Anlagenbildes (15) zu beschränken,
**dadurch gekennzeichnet, dass**
der Operator Station Client (4) dazu ausgebildet ist, den Engineering Station Server (3) automatisiert über die Beschränkung der visuellen Darstellung des Anlagenbildes (15) durch eine Nachricht (17) zu informieren.

2. Leitsystem (1) nach Anspruch 1, bei dem die Nachricht (17) eine Referenz auf das Anlagenbild (15) umfasst.

3. Leitsystem (1) nach Anspruch 2, bei dem die Nachricht (17) einen Typ und/oder eine Identifikation eines Bildelementes (15a, 15b, 15c, 15d) des Anlagenbildes (15) umfasst.

4. Leitsystem (1) nach einem der vorangegangenen Ansprüche, bei dem die Nachricht (17) Informationen über den Operator Station Client (4) umfasst, wobei die Informationen insbesondere einen Namen, einen Typ und/oder einen Standort des Operator Station Clients (4), und/oder eine Einbindung des Operator Station Clients (4) in ein Kommunikationsnetz der technischen Anlage umfassen.

5. Leitsystem (1) nach einem der vorangegangenen Ansprüche, bei dem die Nachricht (17) ein Maß für die vorgenommene Beschränkung umfasst.

6. Leitsystem (1) nach einem der vorangegangenen Ansprüche, bei dem der Operator Station Server (2) dazu ausgebildet ist, die Nachricht (17) des Operator Station Clients (4) in einem Nachrichtenarchiv (10) zu hinterlegen, derart, dass die Nachricht (17) von einem Operator des Leitsystems (1) abrufbar ist.

7. Leitsystem (1) nach einem der vorangegangenen Ansprüche, bei dem die Nachricht (17) eine Alarmmeldung ist, deren Bearbeitung von einem Projekteur und/oder einem Operator des Leitsystems (1) quittierbar ist.

8. Verwendung eines Leitsystems (1) gemäß einem der Ansprüche 1 bis 7 zum Betrieb einer technischen Anlage, insbesondere Prozess- oder Fertigungsanlage.

9. Verfahren zur visuellen Darstellung eines Anlagenbildes (15) einer technischen Anlage, insbesondere Prozess- oder Fertigungsanlage, die einen Operator Station Server (2), einen Engineering Station Server (3) und einen Operator Station Client (4) aufweist, das Verfahren umfassend:
a) Übertragen eines Anlagenbilds (15) der technischen Anlage von dem Operator Station Server (2) an den Operator Station Client (4);
b) Beschränkte visuelle Darstellung des Anlagenbildes (15) durch den Operator Station Client (4);
c) Automatisiertes Notifizieren des Engineering Station Servers (3) über die von dem Operator Station Client (4) vorgenommene Beschränkung der visuellen Darstellung des Anlagenbildes (15) durch eine Nachricht (17).

10. Verfahren nach Anspruch 9, bei dem die Nachricht (17) eine Referenz auf das Anlagenbild (15) umfasst.

11. Verfahren nach Anspruch 10, bei dem die Nachricht (17) einen Typ und/oder eine Identifikation eines Bildelementes (15a, 15b, 15c ,15d) des Anlagenbildes (15) umfasst.

12. Verfahren nach einem der Ansprüche 9 bis 11, bei dem die Nachricht (17) Informationen über den Operator Station Client (4) umfasst, wobei die Informationen insbesondere einen Namen, einen Typ und/oder einen Standort des Operator Station Clients (4), und/oder eine Einbindung des Operator Station Clients (4) in ein Kommunikationsnetz der technischen Anlage umfassen.

13. Verfahren nach einem der Ansprüche 9 bis 12, bei dem die Nachricht (17) ein Maß für die vorgenommene Beschränkung umfasst.

14. Verfahren nach einem der Ansprüche 9 bis 13, bei dem der Operator Station Server (2) die Nachricht (17) des Operator Station Clients (4) in einem Nachrichtenarchiv hinterlegt, derart, dass die Nachricht (17) von einem Operator und/oder einem Projekteur des Leitsystems (1) abrufbar ist.

15. Verfahren nach einem der Ansprüche 9 bis 14, bei dem die Nachricht (17) eine Alarmmeldung ist, deren Bearbeitung von einem Projekteur und/oder einem Operator des Leitsystems (1) quittierbar ist.

## Claims

1. Management system (1) for a technical facility, in
particular a process or manufacturing facility, which has an operator station server (2), an engineering station server (3) and an operator station client (4),
wherein for control and monitoring the operator station server (2) is designed to transfer a facility mimic diagram (15) of the technical facility, previously generated by the engineering station server (3), to the operator station client (4),
and wherein the operator station client (4) is designed to limit the visual representation of the facility mimic diagram in the case of an anticipated overshooting of the duration (15) available for a visual representation of the facility mimic diagram (15),
**characterised in that**
the operator station client (4) is designed to automatically inform the engineering station server (3) about the limitation of the visual representation of the facility mimic diagram (15) by way of a message (17).

2. Management system (1) according to claim 1, wherein the message (17) comprises a reference to the facility mimic diagram (15).

3. Management system (1) according to claim 2, wherein the message (17) comprises a type and/or an identification of a diagram element (15a, 15b, 15c, 15d) of the facility mimic diagram (15).

4. Management system (1) according to one of the preceding claims, wherein the message (17) comprises information about the operator station client (4), wherein the information comprises in particular a name, a type and/or a location of the operator station client (4), and/or an integration of the operator station client (4) in a communications network of the technical facility.

5. Management system (1) according to one of the preceding claims, wherein the message (17) comprises an extent of the set limitation.

6. Management system (1) according to one of the preceding claims, wherein the operator station server (2) is designed to store the message (17) of the operator station clients (4) in a message archive (10) in such a way that the message (17) can be retrieved by an operator of the management system (1).

7. Management system (1) according to one of the preceding claims, wherein the message (17) is an alarm signal whose processing can be acknowledged by a project engineer and/or an operator of the management system (1).

8. Use of a management system (1) according to one of claims 1 to 7 for operation of a technical facility, in particular a process or manufacturing facility.

9. Method for visual representation of a facility mimic diagram (15) of a technical facility, in particular a process or manufacturing facility, which has an operator station server (2), an engineering station server (3) and an operator station client (4), the method comprising:
a) transferring a facility mimic diagram (15) of the technical facility from the operator station server (2) to the operator station client (4);
b) limited visual representation of the facility mimic diagram (15) by the operator station client (4);
c) automatic notifying of the engineering station server (3) about the limitation of the visual representation of the facility mimic diagram (15) set by the operator station client (4) by way of a message (17).

10. Method according to claim 9, wherein the message (17) comprises a reference to the facility mimic diagram (15).

11. Method according to claim 10, wherein the message (17) comprises a type and/or an identification of a diagram element (15a, 15b, 15c ,15d) of the facility mimic diagram (15).

12. Method according to one of claims 9 bis 11, wherein the message (17) comprises information about the operator station client (4), wherein the information comprises in particular a name, a type and/or a location of the operator station client (4), and/or an integration of the operator station client (4) in a communications network of the technical facility.

13. Method according to one of claims 9 to 12, wherein the message (17) comprises an extent of the set limitation.

14. Method according to one of claims 9 to 13, wherein the operator station server (2) stores the message (17) of the operator station client (4) in a message archive in such a way that the message (17) can be retrieved by an operator and/or a project engineer of the management system (1).

15. Method according to one of claims 9 to 14, wherein the message (17) is an alarm signal whose processing can be acknowledged by a project engineer and/or an operator of the management system (1).

## Revendications

1. Système (1) de conduite d'une installation technique, en particulier d'une installation de processus ou de fabrication, qui a un operator station server (2), un engineering station server (3) et un operator station client (4),
dans lequel l'operator station server (2) est constitué pour transmettre à l'operator station client (4), pour la commande et l'observation, une image (15), produite par l'engineering station sever (3), de l'installation technique,
et dans lequel l'operator station client (4) est constitué pour limiter la représentation visuelle de l'image (15) de l'installation, lors d'un dépassement escompté de la durée disponible pour une représentation visuelle de l'image (15) de l'installation,
**caractérisé en ce que**
l'operator station client (4) est constitué pour informer, par un message (17), l'engineering station server (3), d'une manière automatisée, de la limitation de la représentation visuelle de l'image (15) de l'installation.

2. Système (1) de conduite suivant la revendication 1, dans lequel le message (17) comprend une référence à l'image (15) de l'installation.

3. Système (1) de conduite suivant la revendication 2, dans lequel le message (17) comprend un type et/ou une identification d'un élément (15a, 15b, 15c, 15d) de l'image (15) de l'installation.

4. Système (1) de conduite suivant l'une des revendications précédentes, dans lequel le message (17) comprend des informations sur l'operator station client (4), dans lequel les informations comprennent notamment une dénomination, un type et/ou un emplacement de l'operator station client (4) et/ou une intégration de l'operator station client (4) dans un réseau de communication de l'installation technique.

5. Système (1) de conduite suivant l'une des revendications précédentes, dans lequel le message (17) comprend une mesure de la limitation effectuée.

6. Système (1) de conduite suivant l'une des revendications précédentes, dans lequel l'operator station server (2) est constitué pour archiver le message (17) de l'operator station client (4) dans une archive (10) de messages, de manière à ce que le message (17) puisse être appelé par l'opérateur du système (1) de conduite.

7. Système (1) de conduite suivant l'une des revendications précédentes, dans lequel le message (17) est un message d'alerte, dont il peut être accusé de réception, lors de son traitement par un projeteur et/ou un opérateur du système (1) de conduite.

8. Utilisation d'un système (1) de conduite suivant l'une des revendications 1 à 7, pour faire fonctionner une installation technique, en particulier une installation de processus ou de fabrication.

9. Procédé de représentation visuelle d'une image (15) d'une installation technique, en particulier d'une installation de processus ou de fabrication, qui a un operator station server (2), un engineering station server (3) et un operator station client (4), le procédé comprenant :
a) transmission d'une image (15) de l'installation technique de l'operator station server (2) à l'operator station client (4) ;
b) représentation visuelle limitée de l'image (15) de l'installation par l'operator station client (4) ;
c) notification automatisée par un message (17) à l'engineering station server (3) de la limitation effectuée par l'operator station client (4) de la représentation visuelle de l'image (15) de l'installation.

10. Procédé suivant la revendication 9, dans lequel le message (17) comprend une référence à l'image (15) de l'installation.

11. Procédé suivant la revendication 10, dans lequel le message (17) comprend un type et/ou une identification d'un élément (15a, 15b, 15c, 15d) de l'image (15) de l'installation.

12. Procédé suivant l'une des revendications 9 à 11, dans lequel le message (17) comprend des informations sur l'operator station client (4), dans lequel les informations comprennent notamment une dénomination, un type et/ou un emplacement de l'operator station client (4) et/ou une intégration de l'operator station client (4) dans un réseau de communication de l'installation technique.

13. Procédé suivant l'une des revendications 9 à 12, dans lequel le message (17) comprend une mesure de la limitation effectuée.

14. Procédé suivant l'une des revendications 9 à 13, dans lequel l'operator station server (2) archive le message (17) de l'operator station client (4) dans une archive de messages, de manière à ce que le message (17) puisse être appelé par un opérateur et/ou un projeteur du système (1) de conduite.

15. Procédé suivant l'une des revendications 9 à 14, dans lequel le message (17) est un message d'alerte, dont il peut être accusé de réception, lors de son traitement par un projeteur et/ou un opérateur du système (1) de conduite.
